(19) Europäisches Patentamt
European Patent Office
Office européen des brevets

(11) **EP 4 722 829 A1**

(12) **EUROPÄISCHE PATENTANMELDUNG**

(43) Veröffentlichungstag:
08.04.2026 Patentblatt 2026/15

(21) Anmeldenummer: 24203925.3

(22) Anmeldetag: **01.10.2024**

(51) Internationale Patentklassifikation (IPC):
*G05B 19/042* (2006.01)

(52) Gemeinsame Patentklassifikation (CPC):
**G05B 19/0426;** G05B 2219/23008;
G05B 2219/23258; G05B 2219/2609

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Fröhlich, Joachim**
**85614 Kirchseeon (DE)**
• **Rothbauer, Stefan**
**86156 Augsburg (DE)**
• **Stückjürgen, Christoph**
**80807 München (DE)**
• **Telschig, Kilian**
**81543 München (DE)**

(74) Vertreter: **Siemens Patent Attorneys**
**Postfach 22 16 34**
**80506 München (DE)**

(54) **VERFAHREN ZUM ANZEIGEN EINER SCHALTUNGSANORDNUNG ZUM STEUERN EINER MASCHINE MITTELS EINER ELEKTRONISCHEN RECHENEINRICHTUNG, COMPUTERPROGRAMMPRODUKT, COMPUTERLESBARES SPEICHERMEDIUM SOWIE ELEKTRONISCHE RECHENEINRICHTUNG**

(57) Die Erfindung betrifft ein Verfahren zum Anzeigen einer Schaltungsanordnung (10) zum Steuern einer Maschine (22) mittels einer elektronischen Recheneinrichtung (30), mit den Schritten: Erfassen einer Eingabe (34) zur Beschreibung der Schaltungsanordnung (10) mittels einer Erfassungseinrichtung (32) der elektronischen Recheneinrichtung (30), Erfassen einer Darstellungsanforderung (36) zum Darstellen der Schaltungsanordnung (10) mittels der Erfassungseinrichtung (32), Erzeugen der Darstellung (38) der Schaltungsanordnung (10) in Abhängigkeit von der Eingabe (34) und in Abhängigkeit von der Darstellungsanforderung (36) mittels der elektronischen Recheneinrichtung (30), und Anzeigen der erzeugten Darstellung (38) mittels einer Anzeigeeinrichtung (40) der elektronischen Recheneinrichtung (30). Des Weiteren betrifft die Erfindung ein Computerprogrammprodukt, ein computerlesbares Speichermedium sowie eine elektronische Recheneinrichtung (30).

FIG 1

EP 4 722 829 A1

**Beschreibung**

Die nachfolgende Erfindung betrifft ein Verfahren zum Anzeigen einer Schaltungsanordnung zum Steuern einer Maschine mittels einer elektronischen Recheneinrichtung gemäß dem geltenden Patentanspruch 1. Ferner betrifft die Erfindung ein entsprechendes Computerprogrammprodukt, ein entsprechendes computerlesbares Speichermedium sowie eine entsprechende elektronische Recheneinrichtung.

Aus dem Stand der Technik sind bereits sogenannte Automatisierungs-Ecosysteme für cyberphysische Systeme (CBS) bekannt. Ein auf einer Plattform basierendes Cyber-physischen System ist im Wesentlichen aus entkoppelten sogenannten Automatisierungsfunktionen (AF) ausgebildet, deren Verknüpfung oder Struktur sich während des Systemstarts, Systembetriebs und des Systemstopps ändert. Die Automatisierungsfunktionen können auch als Kontrollfunktionen bezeichnet werden. Diese Struktur der Vielzahl von Automatisierungsfunktionen zum Steuern einer Maschine kann auch als Schaltungsanordnung bezeichnet werden. Die Schaltungsanordnung ändert sich beispielsweise für die Anpassung des Systemverhaltens, für die Skalierung der Systemleistung und für die Erweiterung des Systemlebenszyklus.

Im Stand der Technik fehlen hierzu jedoch genaue Beschreibungen von Aspekten des Systemverhaltens aus einer ganzheitlichen Perspektive. Oft wären diese jedoch nützlich für die In-Field-Überwachung und in In-Field-Tests sowie für die Entwicklung und Design des Systems, zur präzisen Beschreibung des gewünschten Verhaltens, um zeitliche Eigenschaften von Automatisierungsfunktions-Gruppen, insbesondere für die Überprüfung sicherheitsrelevanter Funktionen sicherheitskritischer Systeme, durchzuführen und somit festzustellen, ob diese Funktionen, wie vorgesehen, funktionieren.

Eine genaue Beschreibung eines Systemverhaltens muss dabei ausdrucksstark, klar, vielseitig, korrekt und widergebar sein. Angesichts der Tatsache, dass in flexiblen Produktionssystemen sowie in klassischen, starren Produktionsprozessen die Anpassung der Systemfunktionalität zur Laufzeit immer wichtiger wird und Überwachungsfunktionen kontinuierlich neu konfiguriert werden müssen, ergibt sich die Fragestellung, wie ein solches System genau beschrieben werden kann. Ein solches System besteht dabei insbesondere aus transienten Automatisierungsfunktionsgruppen mit transienten Steuer- und Datenverbindungen. Ferner sollten nahtlose Upgrades von zwei oder mehreren miteinander kommunizierenden Automatisierungsfunktionen sowie nahtlose Upgrades kontinuierlicher und sicherheitsrelevanter Automatisierungsfunktionen beschrieben werden können. Auch ist eine dynamische Anpassung nicht stoppbarer Automatisierungsfunktionen zu beschreiben ist von wichtiger Bedeutung.

Aus dem Stand der Technik ist das sogenannte Communication Sequential Processes (CSP) bereits bekannt und bildet die am häufigsten verwendete Datenfluss-Theorie zur Beschreibung gleichzeitiger Prozesse beziehungsweise Funktionen, die mit Hilfe von Nachrichten kommunizieren. CSP hat jedoch keine direkte, praktische Anwendung und unterstützt auch nicht speziell die Kommunikation zwischen automatisierten Funktionen, die über beispielsweise ein Publish-Subscribe-Netzwerk lose gekoppelt sind und Echtzeitsysteme mit realen Zeitanforderungsbeschränkungen aufweisen. CSP verfügt über eine formale, textuelle Repräsentation. Eine praktikable graphische Darstellung fehlt allerdings.

Funktionsblöcke, die an gemeinsame Datenkanäle angeschlossen sind, sind in logischen Schaltkreise von Decodern (DED) und in Blockdiagrammen eines Mikrocontrollers mit mehreren Funktionseinheiten üblich, die ein oder mehrere Daten-/Adress-/Steuerbusse teilen. Ähnliche Diagramme werden für dynamische Datenstrom-Pipelines in asynchroner, nachrichtenorientierter Middleware mit verbundenen datenproduzierenden und -konsumierenden Programmen verwendet, zum Beispiel für ereignisgesteuerte Systeme. In eingebetteten Computing- und Echtzeitsystemen werden manchmal auch synchrone Systeme dargestellt, die den Datenverteilungsdienst (DDS) und seine Public-Subscribe-Architektur nutzen, wie beispielsweise RTI Connext.

Funktionsblöcke mit Eingangs- und Ausgangsdatenports sind in Darstellungen von Software-Komponenten (PGSML) und Datenflussknoten (DRBS) üblich. Zeitgesteuerte Systeme werden nicht explizit unterstützt. Dies gilt ebenfalls für Ereignis-/Sequenzdiagramme (PGSML).

Mit entsprechenden Anwendertools können auch Skripte geschrieben werden, die automatisch zu Diagrammen führen, die zur Dokumentationszwecken verwendet werden können, wie beispielsweise Komponentendiagramme, Ähnlichfunktionsblöcke und Ereignis-Sequenz-Diagramme. Diese Tools verfügen allerdings über keine operationale Semantik und weisen nicht die notwendige Präzision und Abstraktion auf, um die temporalen Eigenschaften von Gruppen zeitgesteuerter Automatisierungsfunktionen zu spezifizieren, zu überwachen und zu testen.

Insgesamt fehlen somit heute angemessene, graphische und äquivalent textuelle Beschreibungen paralleler und sequentieller Interaktionen zwischen dynamisch konfigurierbaren, periodisch ausgeführten, insbesondere zeitgesteuerten, Funktionsblöcken, die sich im Zeitverlauf entwickeln. Angemessene Beschreibungen von Interaktionen würden jedoch automatische Beobachtungen und Überprüfungen von Eigenschaften von Automatisierungsfunktionsgruppen und Automatisierungsfunktionsinteraktionen zur Laufzeit eines CSP ermöglichen.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchem eine Schaltungsanordnung für eine Maschine verbessert beschrieben und angezeigt werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Anzeigen einer Schaltungsanordnung zum Steuern einer Maschine mittels einer elektronischen Recheneinrichtung. Es wird eine Eingabe zur Beschreibung der Schaltungsanordnung mittels einer Erfassungseinrichtung der elektronischen Recheneinrichtung erfasst. Es wird eine Darstellungsanforderung zum Darstellen der Schaltungsanordnung mittels der Erfassungseinrichtung erfasst. Es wird die Darstellung der Schaltungsanordnung in Abhängigkeit von der Eingabe und in Abhängigkeit von der Darstellungsanforderung mittels der elektronischen Recheneinrichtung erzeugt, und es erfolgt das Anzeigen der erzeugten Darstellung mittels einer Anzeigeeinrichtung der elektronischen Recheneinrichtung.

Somit ist es ermöglicht, dass auf Basis der Eingabe und auf Basis der Darstellungsanforderung eine entsprechende Transformation der beschriebenen Schaltungsanordnung zur Darstellung der Schaltungsanordnung durchgeführt und angezeigt wird.

Beispielsweise kann als Eingabe ein Textbaustein beziehungsweise ein Trace genutzt werden, woraufhin beispielsweise der Trace in eine graphische Strukturierung beziehungsweise Anzeige umtransformiert wird. Es kann dann eine Darstellungsanforderung, beispielsweise die Anzeige von Kommunikationen zwischen Automatisierungsfunktionen, die Anzeige von Abhängigkeiten von Automatisierungsfunktionen oder dergleichen vorgegeben werden. In Abhängigkeit davon wird nun beispielsweise die Kommunikation zwischen Automatisierungsfunktionen graphisch dargestellt. Somit kann ein Nutzer der Anzeigeeinrichtung beziehungsweise der elektronischen Recheneinrichtung zuverlässig auf Basis einer Eingabe und der Darstellungsanforderung eine Übersicht über die Schaltungsanordnung erhalten.

Dabei kann die Schaltungsanordnung sowohl simuliert werden als auch sich im Betrieb befinden und tatsächliche Steuersignale für die Maschine erzeugen.

Insbesondere kann somit beispielsweise über die Eingabe eine domainspezifische Sprache (DSL) zur Erfassung von Interaktionsmuster in dynamischen, zeitgesteuerten Gruppen von Automatisierungsfunktionen dargestellt werden. Aussagen in dieser domainspezifischen Sprache können sowohl graphisch als auch textuell dargestellt werden. Graphische und textuelle Darstellungen weisen unterschiedliche Syntax auf, teilen sich aber eine gemeinsame semantische Grammatik. Aussagen über statische und dynamische Eigenschaften nahtloser Upgrades von messtaktgesteuerten Automatisierungsfunktionsgruppen sowohl graphische als auch textuelle Aussagen, wenden diese semantische Grammatik an. Dynamisch sich ändernde Strukturen in Aktionen von Gruppen von Automatisierungsfunktionsinstanzen können zur Laufzeit der Schaltungsanordnung automatisch anhand korrekt gebildeter Verhaltensbeschreibungen in der vorgeschriebenen domainspezifischen Sprache überprüft werden. Anweisungen in der vorgeschlagenen domainspezifischen Sprache können beispielsweise mit Datenkanälen formuliert werden, die in einem Datenbereich ausgewählt werden, und Automatisierungsfunktionsinstanzen, die im Funktionsbereich ausgewählt werden. Zusammen bilden die ausgewählten Datenkanäle und Automatisierungsfunktionsinstanzen ein oder mehrere strukturierte Automatisierungsfunktionsgruppen und Interaktionen darin. Die Strukturen der Automatisierungsfunktionsgruppe und die Interaktionen entwickeln sich im Zeitverlauf. Änderungspunkte für Eigenschaften markieren Momente auf der Zeitachse, an denen Eigenschaften relevant für eine bestimmte Aufgabe geändert werden. Strukturänderungspunkte sind Änderungen an der Automatisierungsfunktionsgruppenstruktur.

Eine Funktionsverbindungsansicht verknüpft dabei Datenkanäle und Automatisierungsfunktionsinstanzen. Automatisierungsfunktionsinstanzen sowie Datenkanäle und deren Datenbeziehungen, insbesondere Eingabe und Ausgang, zwischen ihnen gelten für ein bestimmtes Zeitintervall zwischen zwei Strukturänderungspunkten. Optional spezifizierte Datentypen von Automatisierungsfunktionen, Kommunikationskanälen und Automatisierungsfunktionsvariablen, wie beispielsweise Sensor oder Aktor, fördern die Ausdrucksstärke, Integrität und Richtigkeit von Verhaltensbeschreibungen. Die Typen können an die Bedürfnisse des Systems angepasst werden, die zum Beispiel für eine kombinierte Sensor-/Aktuatorfunktion stehen und für eine Steuerfunktion-Feldbusanbindung. Beispielsweise kann eine Automatisierungsfunktion einen Sensortyp beschreiben, während eine andere Automatisierungsfunktion einen beliebigen Datentyp darstellt. Die optionalen Typenspezifikationen tragen zur Klarheit und zur Genauigkeit der Verhaltensbeschreibungen bei, indem sie zusätzliche Informationen über die Art der verwendeten Automatisierungsfunktionen, Datenkanäle und Variablen bereitstellen.

Gegenüber dem Stand der Technik hat somit die vorliegende Erfindung den Vorteil, dass eine domainspezifische Sprache für abschließende, integrierte, konsistente und prägnante Beschreibungen der Schaltungsanordnung bereitstellt werden kann. Hierbei kann eine Beschreibung von Variablen, bedingten Strukturen variabler Automatisierungsfunktionen und variablen Verbindungen zwischen ihnen in Form von Publish-Subscribe-Datenkanälen beschrieben werden. Des Weiteren kann eine Beschreibung von Variablen, bedingten Interaktionen zwischen Automatisierungsfunktionsinstanzen durch bedingte, zeitliche sequentielle und parallele Nachrichtensendungen und Publish-Subscribe-Kommunikationskanälen dargestellt werden. Ebenfalls können Datenvariablen und sich ändernde Werte von Automatisierungsfunktionsinstanzen beschrieben werden. Des Weiteren können Datenvariablen und sich ändernde Werte zwischen Automatisierungsfunktionsinstanzen in Publish-Subscribe-Kommunikationskanälen beschrieben werden. Ebenfalls kann eine graphische und textuelle Darstellung erfolgen, die insbesondere äquivalent in Bezug auf ihre Semantik sind, da beide Darstellungen auf einer gemeinsamen semantischen Grammatik basieren.

Dies hat insbesondere die Vorteile, dass die graphische Darstellung in Form einer entsprechenden Sprache leicht verständliche Visualisierungen des Verhaltens von einzelnen Automatisierungsfunktionsinstanzen über die gesamte Automatisierungsfunktionslebenszeit und Gruppen von Automatisierungsfunktionsinstanzen während des Upgrade-Betriebs dargestellt werden können. Äquivalente, textuelle Darstellungen in Form dieser Sprache ermöglichen eine genaue Aufzeichnung von Strukturen von Automatisierungsfunktionsinstanzen-Gruppen und Änderungen dieser Strukturen für die Analyse von CPS, Aufzeichnung von Prozessen in den Strukturen von Automatisierungsfunktionsinstanz-Gruppen für die Analyse von CPS, die Wiedergabe von Prozessen und Strukturen für die Analyse und Dokument von CPS, Spezifikationen von Automatisierungsfunktionsprozessen und -strukturen für das CPS-Design und Tests und Überwachung von Automatisierungsfunktionsinstanz-Prozessen und -strukturen gegen CPS-Verhaltensbeschreibungen.

Sowohl graphische als auch textuelle Darstellungen von dementsprechenden Anweisungen haben normalisierte Formen, die automatisch ineinander übersetzt werden können, indem eine gemeinsame Grammatik verwendet wird. Gleichzeitig bereitgestellte graphische und textuelle Darstellungen und Anweisungen in Form von Sprache fördern das Verständnis des Verhaltens und der Eigenschaften von Gruppen zeitgetriggerter Automatisierungsfunktionen bei beispielsweise engen, zyklusgenauen Zeitachsen und bei weiten Zeitachsen, auf denen sich der Wahrheitswert von Aussagen in temporärer Logik (TML) im Laufe der Zeit ändern kann. Die Ingenieurarbeit, der Betrieb und die Sicherheitseinschätzungen von CPS, die zeitgetriggert und periodisch betrieben werden, profitieren davon.

Gemäß einer vorteilhaften Ausgestaltungsform wird als Eingabe eine Texteingabe zur Beschreibung der Schaltungsanordnung erfasst. Insbesondere kann die Texteingabe in Form von binären Codes oder entsprechenden Textbausteinen genutzt werden. Ferner können auch entsprechende Traces zum Beschreiben der Schaltungsanordnung genutzt werden. Ein Trace kann sich dabei auf eine Reihe von Techniken und Werkzeugen beziehen, die es ermöglichen, den Ablauf einer Programmausführung nachzuvollziehen, indem wichtige Informationen wie Funktionsaufrufe, Variablenwerte, Speicheradressen und andere systemrelevante Daten erfasst und protokolliert werden. Ein Trace kann dabei auf verschiedene Arten erzeugt werden, zum Beispiel durch das Hinzufügen von Ausgaben in den Quellcodes, die während der Programmausführung angezeigt oder in eine Datei geschrieben werden, oder durch Verwendung von Debugging-Tools und -Funktionen, die automatisch Traces erzeugen. Somit ist es ermöglicht, dass auf Basis einer Texteingabe in eine entsprechende Darstellung der Schaltungsanordnung realisiert werden kann.

Eine weitere vorteilhafte Ausgestaltungsform sieht vor, dass die Texteingabe in eine graphische Beschreibung der Schaltungsanordnung transformiert wird. Beispielsweise können entsprechende Automatisierungsfunktionen graphisch dargestellt werden und deren Verbindungen für Steuerung beziehungsweise auch für die Kommunikation entsprechend graphisch dargestellt werden. Somit kann für einen Nutzer der elektronischen Recheneinrichtung ein einfacher Überblick geschaffen werden, wie die Schaltungsanordnung aufgebaut ist beziehungsweise kommuniziert.

Eine weitere vorteilhafte Ausgestaltungsform sieht vor, dass als Eingabe eine graphische Beschreibung der Schaltungsanordnung erfasst wird. Beispielsweise können entsprechende Automatisierungsfunktionen bereits graphisch als Funktionsblöcke dargestellt werden. Diese können nun graphisch miteinander in Beziehung gebracht werden als Eingabe. Es kann dann wiederum erfolgen, dass in Abhängigkeit der Darstellungsanforderung die Anzeige entsprechend erzeugt werden kann.

Dabei hat es sich weiterhin als vorteilhaft erwiesen, wenn die graphische Beschreibung in eine textuelle Darstellung der Schaltungsanordnung transformiert wird. Somit kann vorgesehen sein, dass beispielsweise die graphische Beschreibung dann als textuelle Darstellung, beispielsweise in Form von Traces, entsprechend ausgegeben und somit angezeigt wird. Somit kann der Trace dann genutzt werden, um beispielsweise weitere Beschreibungen der Schaltungsanordnung durchführen zu können.

In einer weiteren vorteilhaften Ausgestaltungsform ist vorgesehen, dass auf Basis der Eingabe eine Darstellung einer bereits existierenden Schaltungsanordnung adaptiert wird. Beispielsweise kann die existierende Schaltungsanordnung sowohl graphisch als auch in textueller Darstellung vorliegen. Es kann nun eine Eingabe in Form einer Texteingabe oder einer graphischen Beschreibung durchgeführt werden und die Schaltungsanordnung entsprechend adaptiert werden. Somit können bereits existierende Schaltungsanordnungen auch im Nachhinein angepasst und adaptiert werden.

In einer weiteren vorteilhaften Ausgestaltungsform ist vorgesehen, dass auf Basis der erzeugten Darstellung ein Betriebstest der Schaltungsanordnung durchgeführt wird. Somit kann nach der Eingabe ein entsprechender Betriebstest, insbesondere automatisiert, durchgeführt werden. Hierzu können entsprechende Simulationen der Automatisierungsfunktionen und deren Abhängigkeiten simuliert werden. Ferner können, beispielsweise vor einer tatsächlichen Inbetriebnahme der Maschine, entsprechende Tests durchgeführt werden. Hierzu können sowohl entsprechende Steuersignale für die Maschine erzeugt werden, als auch beispielsweise Sensorsignal zum Zwecke der Überwachung der Maschine von der Maschine empfangen werden, um den Betriebstest zuverlässig durchführen zu können. Diese Betriebstests können als In-Field Test ausgebildet sein. Auf Basis der erzeugten Darstellung kann nun ein Nutzer beispielsweise bei der graphischen Darstellung nachvollziehen, wie die entsprechenden Abhängigkeiten sind und wie die Schaltungsanordnung im Betrieb funktioniert.

Ebenfalls vorteilhaft ist, wenn auf Basis der erzeugten Darstellung eine Testfallgenerierung für einen Betriebstest der Schaltungsanordnung durchgeführt wird. Mit anderen Worten kann ein Testfall auf Basis der erzeugten Darstellung erst generiert werden und im Nachhinein auch durchgeführt werden. Auf Basis der erzeugten Darstellung können somit unterschiedliche Tests vorgeschlagen werden, welche durchzuführen sind, um eine vollumfängliche Simulation der Schaltungsanordnung durchführen zu können. Somit kann einem Nutzer automatisiert auch ein Testfall vorgeschlagen werden, welcher durchzuführen ist, um eine entsprechende Simulation der Schaltungsanordnung durchführt zu können.

Eine weitere vorteilhafte Ausgestaltungsform sieht vor, dass auf Basis der Darstellungsanforderung gegenseitige Abhängigkeiten von zumindest zwei Komponenten der Schaltungsanordnung dargestellt werden und/oder Kommunikationswege der zumindest zwei Komponenten dargestellt werden und/oder gegenseitige Beeinflussungen der zumindest zwei Komponenten dargestellt werden und/oder Abhängigkeiten zur Steuerung der Maschine dargestellt werden. Bei den Komponenten kann es sich beispielsweise insbesondere um die sogenannten Automatisierungsfunktionen handeln. Somit ist es ermöglicht, dass auf Basis der Darstellungsanforderungen eine entsprechende nutzerspezifische Adaption der Darstellung durchgeführt wird.

In einer weiteren vorteilhaften Ausgestaltungsform ist vorgesehen, dass zeitabhängige Änderungen in der dargestellten Schaltungsanordnung mit angezeigt werden. Beispielsweise kann dann über einen längeren Zeitraum beobachtet werden, wie sich die Schaltungsanordnung entsprechend verhält. Somit können beispielsweise über einen längeren Zeitraum die unterschiedlichen Kommunikationen sowie die Erzeugung von Steuersignalen dargestellt und beobachtet werden. In Abhängigkeit der Darstellungsanforderung können nun die entsprechenden Informationen dargestellt werden, sodass ein Nutzer nachvollziehen kann, wie die entsprechenden zeitabhängigen Abläufe innerhalb der Schaltungsanordnung sind.

In einer weiteren vorteilhaften Ausgestaltungsform ist vorgesehen, dass in Abhängigkeit von der Darstellungsanforderung ein Detailgrad der Darstellung angepasst wird. Insbesondere kann somit die Granularität der Anzeige adaptiert werden. Somit kann beispielsweise ein Nutzer lediglich eine einfache Anzeige mit wenig Detailgrad der Schaltungsanordnung angezeigt bekommen. Alternativ kann der Nutzer auch entsprechende detailliertere Anzeigen, beispielsweise Kommunikationsstandards zwischen den Komponenten sowie weitere Ausführungen von den Kontrollfunktionen beziehungsweise Automatisierungsfunktionen mit angezeigt bekommen.

Ebenfalls vorteilhaft ist, wenn auf Basis der erzeugten Darstellung der Schaltungsanordnung zumindest ein Steuersignal zum Steuern der Maschine erzeugt wird. Insbesondere kann beispielsweise nach einer Simulation der Schaltungsanordnung diese auch tatsächlich ausgeführt werden und entsprechende Steuersignale zum Steuern der Maschine erzeugt werden und an die Maschine übertragen werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung auch ein computerlesbares Speichermedium mit zumindest einem Computerprogrammprodukt nach dem vorhergehenden Aspekt.

Ein nochmals weiterer Aspekt der Erfindung betrifft eine elektronische Recheneinrichtung zum Anzeigen einer Schaltungsanordnung zum Steuern einer Maschine, mit zumindest einer Erfassungseinrichtung und einer Anzeigeeinrichtung, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Vorteilhafte Ausgestaltungsformen des Verfahrens sind als vorteilhafte Ausgestaltungsformen des Computerprogrammprodukts, des computerlesbares Speichermediums sowie der elektronischen Recheneinrichtung anzusehen. Die elektronische Recheneinrichtung weist hierzu gegenständliche Merkmale auf, um entsprechende Verfahrensschritte durchführen zu können.

Unter einer Recheneinheit/elektronische Recheneinrichtung/Node kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibungen sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:

Fig. 1    ein schemtische sBlockschaltbild gemäß einer Ausführungsform einer elektronischen Recheneinrichtung;

Fig. 2    ein schematisches Blockschaltbild gemäß einer Ausführungsform einer Schaltungsanordnung;

Fig. 3    ein weiteres Blockschaltbild gemäß einer Ausführungsform der Schaltungsanordnung aus Fig. 2;

Fig. 4    ein weiteres schematisches Blockschaltbild gemäß einer Ausführungsform einer Schaltungsanordnung;

Fig. 5    ein weiteres schematisches Blockschaltbild gemäß der Ausführungsform der Schaltungsanordnung aus Fig. 4;

Fig. 6    ein weiteres schematisches Blockschaltbild einer Schaltungsanordnung;

Fig. 7    ein schematisches Blockschaltbild gemäß einer Ausführungsform der Schaltungsanordnung zu einem ersten Zeitpunkt;

Fig. 8    ein weiteres schematisches Blockschaltbild gemäß einer Ausführungsform der Schaltungsanordnung aus Fig. 7 zu einem weiteren Zeitpunkt; und

Fig. 9    ein schematisches Ablaufdiagramm gemäß einer zeitlichen Abfolge für eine Schaltungsanordnung.

In den Figuren sind gleiche oder funktionsgleiche Elemente mit gleichen Bezugszeichen versehen.

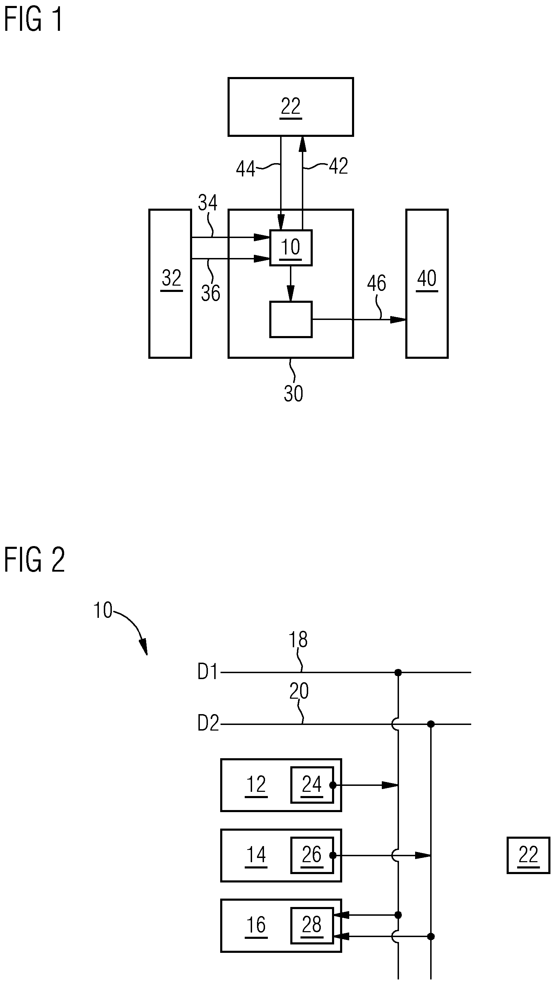

Fig. 1 zeigt ein schematisches Blockschaltbild gemäß einer Ausführungsform einer elektronischen Recheneinrichtung 30. Die elektronische Recheneinrichtung 30 ist zum Anzeigen einer Schaltungsanordnung 10 zum Steuern einer Maschine 22 ausgebildet. Die elektronische Recheneinrichtung 30 weist zumindest eine Erfassungseinrichtung 32 und eine Anzeigeeinrichtung 40 auf.

Mittels der elektronischen Recheneinrichtung 30 kann ein erfindungsgemäßes Verfahren zum Anzeigen der Schaltungsanordnung 10 bereitgestellt werden. Es erfolgt hierbei das Erfassen einer Eingabe 34 zur Beschreibung der Schaltungsanordnung 10 mittels der Erfassungseinrichtung 32. Es wird eine Darstellungsanforderung 36 zum Darstellen der Schaltungsanordnung 10 mittels der Erfassungseinrichtung 32 erfasst. Es erfolgt das Erzeugen der Darstellung 28 der Schaltungsanordnung in Abhängigkeit von der Eingabe 34 und in Abhängigkeit von der Darstellungsanforderung 36 mittels der elektronischen Recheneinrichtung 30 und das Anzeigen der erzeugten Darstellung 38 mittels einer Anzeigeeinrichtung 40 der elektronischen Recheneinrichtung 30. Hierzu kann von der elektronischen Recheneinrichtung ein Anzeigesignal 46 an die Anzeigeeinrichtung 40 übermittelt werden.

Dabei kann insbesondere vorgesehen, dass als Eingabe 34 eine Texteingabe zur Beschreibung der Schaltungsanordnung 10 erfasst wird. Ferner kann die Texteingabe in eine graphische Beschreibung der Schaltungsanordnung 10 transformiert werden. Alternativ kann als Eingabe 34 eine graphische Beschreibung der Schaltungsanordnung 10 erfasst werden. Die graphische Beschreibung kann dann in eine textuelle Darstellung der Schaltungsanordnung 10 transformiert werden.

Auf Basis der Eingabe 34 wird insbesondere eine Darstellung 38 einer bereits existierenden Schaltungsanordnung 10 adaptiert. Ferner kann auf Basis der erzeugten Darstellung ein Betriebstest der Schaltungsanordnung 10 durchgeführt werden. Des Weiteren kann auf Basis der erzeugten Darstellung 38 eine Testfallgenerierung für einen Betriebstest der Schaltungsanordnung 10 durchgeführt werden.

Weiterhin kann vorgesehen sein, dass auf Basis der Darstellungsanforderung 36 gegenseitige Abhängigkeiten von zumindest zwei Komponenten der Schaltungsanordnung 10 dargestellt und/oder Kommunikationswege der zumindest zwei Komponenten dargestellt und/oder gegenseitige Beeinflussungen der zumindest zwei Komponenten dargestellt werden und/oder Abhängigkeiten zur Steuerung der Maschine 22 dargestellt werden.

Weiterhin kann vorgesehen, dass zeitabhängige Änderungen in der dargestellten Schaltungsanordnung 10 mit angezeigt werden. Des Weiteren kann vorgesehen sein, dass in Abhängigkeit von der Darstellungsanforderung 36 ein Detailgrad der Darstellung angepasst wird.

Weiterhin kann noch vorgesehen sein, dass auf Basis der erzeugten Darstellung 38 der Schaltungsanordnung 10 zumindest ein Steuersignal 42 zum Steuern der Maschine 22 erzeugt. Ferner kann von der Maschine 22 ein Signal 44 zum Überwachen der Maschine an die elektronische Recheneinrichtung 30 übermittelt werden.

Insbesondere betrifft diese Erfindung eine domänenspezifische Sprache (DSL) zur Erfassung von Interaktionsmustern in dynamischen, zeitgetriggerten Automatisierungsfunktionsgruppen. Aussagen in dieser DSL können sowohl graphisch als auch textuell dargestellt werden. Graphische und textuelle Darstellungen haben unterschiedliche Syntax, teilen sich aber eine gemeinsame semantische Grammatik. Graphische und textuelle Aussagen über statische und dynamische Eigenschaften von nahtlosen Upgrades gekoppelter, zeitgetriggerter Automatisierungsfunktionsgruppen wenden diese semantische Grammatik an. Dynamisch ändernde Strukturen und Interaktionen in Gruppen von AF-Instanzen (AFI) können während der Laufzeit eines CPS automatisch auf Übereinstimmung mit korrektem Verhalten gemäß der vorgeschlagenen DSL überprüft werden.

Die grafischen und textuellen Aussagen in der DSL beschreiben die Interaktionen zwischen den Automatisierungsfunktionsgruppen, einschließlich Eingangs- und Ausgangsvariablen, Zeitpläne, Bedingungen und Aktionen. Durch die Verwendung dieser DSL können Entwickler von CPS (Cyber-Physical Systems) komplexe Interaktionen zwischen Automatisierungsfunktionsgruppen einfach und präzise beschreiben, was die Zuverlässigkeit und Effizienz der Systeme verbessert. Die graphische Darstellung ermöglicht es auch Nicht-Experten, die Aussagen in der DSL zu verstehen und zu überprüfen, was die Zusammenarbeit zwischen Entwicklern und anderen Beteiligten erleichtert.

Aussagen in der vorgeschlagenen DSL werden mit Datenkanälen (DC) formuliert, die im Datenbereich ausgewählt werden, und Automatisierungsfunktionsinstanzen (AFI), die im Funktionsbereich ausgewählt werden. Zusammen bilden ausgewählte DC und AFI eine oder mehrere strukturierte AFI-Gruppen und Interaktionen zwischen ihnen.

Die Strukturen von AFI-Gruppen (FCP) und Interaktionen (FIP) entwickeln sich im Laufe der Zeit weiter. Änderungspunkte für Eigenschaften (PCP) markieren Momente auf der Zeitachse, in denen Eigenschaften relevant für eine bestimmte Aufgabe geändert werden. Strukturänderungspunkte sind Änderungen in der AF-Gruppenstruktur (SCP).

In dieser DSL werden Datenkanäle und Automatisierungsfunktionsinstanzen verwendet, um Interaktionen zwischen den Automatisierungsfunktionsgruppen zu definieren. Die Strukturen und Interaktionen der AFI-Gruppen ändern sich im Laufe der Zeit, was durch Änderungspunkte für Eigenschaften (PCP) und Strukturänderungspunkte (SCP) dargestellt wird. Diese Konzepte ermöglichen es Entwicklern, komplexe Interaktionen zwischen Automatisierungsfunktionsgruppen in CPS zu definieren und ihre Zuverlässigkeit und Effizienz zu verbessern.

Ein Funktionsverbindungsdiagramm verknüpft Datenkanäle (DC) und Automatisierungsfunktionsinstanzen (AFI). AFI, DC und Datenbeziehungen (in, out) zwischen ihnen gelten für ein bestimmtes Zeitintervall zwischen zwei Strukturänderungspunkten.

Ein Funktionsverbindungsdiagramm stellt die Beziehungen zwischen den Automatisierungsfunktionsinstanzen und Datenkanälen dar, einschließlich der Eingangs- und Ausgangsdatenbeziehungen. Durch die Verwendung von Zeitintervallen können Entwickler genau festlegen, wann eine bestimmte Funktion oder ein Datenkanal aktiv ist, was die Zuverlässigkeit und Genauigkeit des Systems verbessert. Diese Diagramme erleichtern auch das Verständnis und die Überprüfung der Interaktionen zwischen Automatisierungsfunktionsgruppen in CPS.

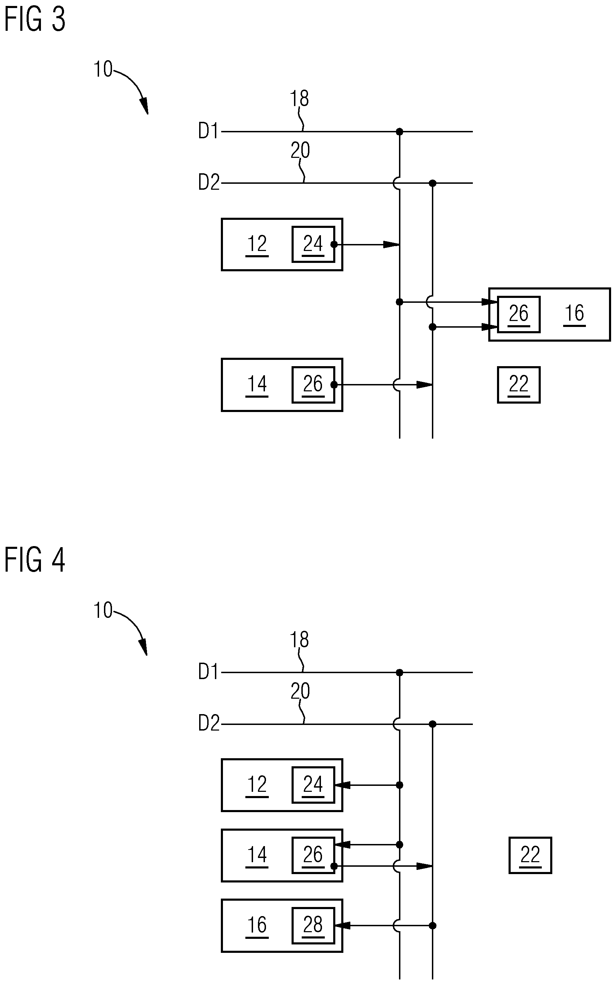

Fig. 2 und Fig. 3 zeigen ein schematisches Blockschaltbild gemäß einer Ausführungsform einer Schaltungsanordnung 10. Die Schaltungsanordnung 10 weist im vorliegenden Ausführungsbeispiel eine erste elektronische Recheneinrichtung 12 mit einer ersten Automatisierungsfunktion 24, eine zweite elektronische Recheneinrichtung 14 mit einer zweiten Automatisierungsfunktion 26 und eine dritte elektronische Recheneinrichtung 16 mit einer dritten Automatisierungsfunktion 28 auf. Über einen ersten Kommunikationskanal 18 und einen zweiten Kommunikationskanal 20 kann eine entsprechende Kommunikation stattfinden.

Optional Typangaben von Automatisierungsfunktionen 24, 26, 28, DC und AF-Variablen, wie S (Sensor) und T3 (beliebiger Datentyp) fördern die Ausdrucksstärke, Integrität und Richtigkeit von Verhaltensbeschreibungen. Die Typen können an die Anforderungen des Systembereichs angepasst werden, zum Beispiel kann eine Automatisierungsfunktion 24, 26, 28 eine kombinierte Sensor-/Aktuatorfunktion und/oder eine Steuerfunktion ohne Feldbusverbindung bedeuten.

Durch optionale Typangaben können Entwickler genau angeben, welche Art von Automatisierungsfunktion 24, 26, 28 oder Datenkanal/Kommunikationskanal 18, 20 verwendet wird, was die Integrität und Richtigkeit der Systembeschreibungen verbessert. Durch die Anpassung an den Systembereich können diese Typen auch dazu beitragen, die Ausdrucksstärke der Verhaltensbeschreibungen zu erhöhen, indem sie eine breite Palette von Automatisierungsfunktionen 24, 26, 28 und Datenkanälen unterstützen. Diese Option ermöglicht es Entwicklern auch, spezifische Anforderungen des CPS-Systems in den Verhaltensbeschreibungen widerzuspiegeln.

Die Fig. 2 und 3 zeigen zwei semantisch äquivalente Ansichten der Funktionsverbindungsansicht für dieselbe AF-Gruppe. Die lineare Ansicht in Fig. 2 ermöglicht die Entwicklung dieser Ansicht nach rechts, neben der Zeit, in Funktionsinteraktionsansichten. Die flächenhafte Ansicht rechts in Fig. 3 betont hingegen die Eingangs-Ausgangs-Beziehungen zwischen den API in Leserichtung.

Die nachfolgenden Ausdrücke {E1a} bis {E1c} heben verschiedene Ansichten der semantisch äquivalenten AF-Gruppe in den Fig. 2 und 3 hervor, wobei verschiedene Ansichten unterschiedliche Ingenieuraufgaben unterstützen. Die DC-Ansicht in {E1a} betont die DC an vorderster Stelle, was sich gut für datenzentrierte Architekturen eignet. Die AF-Ansicht in {E1b} betont hingegen die AFI an vorderster Stelle, was sich gut für Komponentenarchitekturen eignet. In {E1c} wird die AF-DC-Ansicht hervorgehoben, indem die DC im Zentrum platziert werden, was sich gut für Funktions- und Wirkketten sowie Abhängigkeitsanalysen eignet. Alle diese graphischen und textuellen Ansichten der gleichen AF-Gruppe können automatisch ineinander übersetzt werden.

$$D1 < AF1 \qquad \{E1a\}$$
$$D2 < AF2$$
$$D1, D2 > AF3$$

$$AF1 > D1 \qquad \{E1b\}$$
$$AF2 > D2$$
$$AF3 < D1, D2$$

$$AF1 > D1 > AF3 \qquad \{E1c\}$$
$$AF2 > D2 > AF3$$

Ausdrücke können mit Typen und Bereitstellungsbeziehungen annotiert werden. Zum Beispiel zeigt die typisierte Variante {E2} von {E1} zqei physisch unabhängige Sensoren an, die Daten unterschiedlicher Typen an einen einzigen, physisch unabhängigen Aktuator senden.

$$AF1{:}S@CN1 > D1{:}T1 > AF3{:}A@CN3 \qquad \{E2\}$$
$$AF2{:}S@CN2 > D2{:}T2 > AF3{:}A@CN3$$

Durch das Annotieren von Ausdrücken mit Typen und Bereitstellungsbeziehungen können Entwickler genau angeben, wie die verschiedenen Komponenten eines CPS-Systems miteinander verbunden sind und welche Art von Daten zwischen ihnen ausgetauscht wird. Dies kann dazu beitragen, die Integrität und Richtigkeit des Systems zu verbessern, indem sichergestellt wird, dass die richtigen Komponenten miteinander verbunden sind und die richtigen Arten von Daten ausgetauscht werden. In {E2} wird zum Beispiel durch Angeben der Typen und physischen Unabhängigkeit der Sensoren und des Aktuators deutlich, dass zwei verschiedene Arten von Sensordaten an einen gemeinsamen Aktuator gesendet werden.

Getypte Ausdrücke ermöglichen Konsistenzprüfungen und die Analyse von Ressourcenauslastungen, Datenübertragungspfaden, Fehlerbehälterregionen und mehr.

Durch das Verwenden getyperter Ausdrücke können Entwickler prüfen, ob alle Komponenten eines CPS-Systems korrekt typisiert sind und wie sie miteinander interagieren. Diese Information kann dann verwendet werden, um die Ressourcenauslastung zu analysieren, um festzustellen, welche Komponenten wie viel Rechenleistung, Speicher und Bandbreite benötigen. Darüber hinaus können getypte Ausdrücke auch dabei helfen, Fehler enthaltene Bereiche zu identifizieren, indem sie zeigen, wie Daten zwischen den Komponenten des Systems fließen.

Diese Informationen sind wichtig, um die Leistung und Zuverlässigkeit eines CPS-Systems zu optimieren, indem sichergestellt wird, dass es genügend Ressourcen hat, um effizient zu arbeiten, und dass Fehler enthaltene Bereiche minimiert werden. Durch das Annotieren von Ausdrücken mit Typen können Entwickler diese Informationen automatisch erfassen und analysieren lassen, anstatt sie manuell berechnen oder nachverfolgen zu müssen.

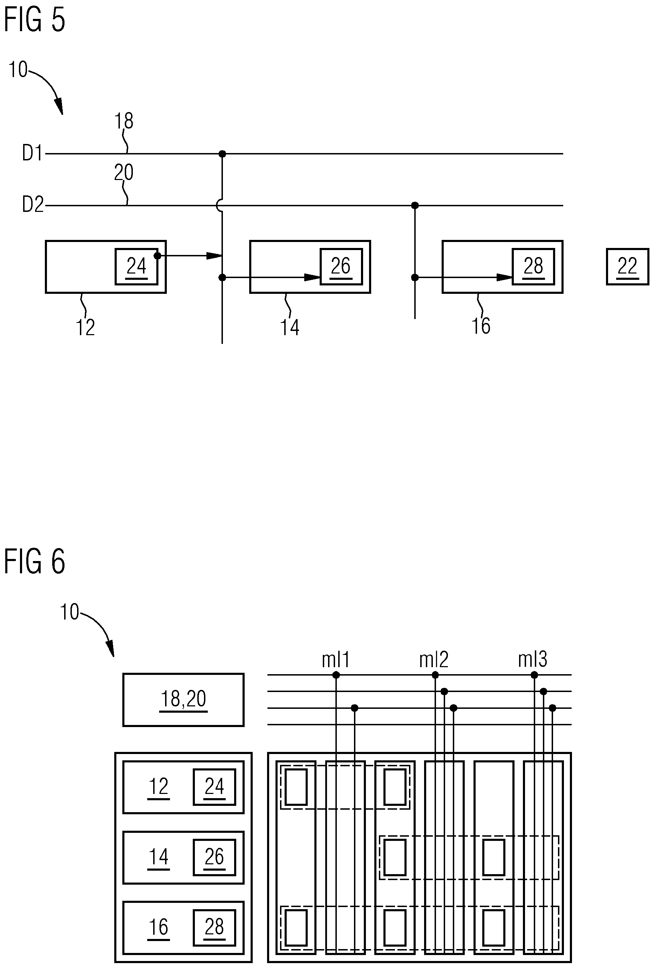

Die Fig. 4 und 5 zeigen ein weiteres schematisches Blockschaltbildung einer weiteren Ausgestaltungsform einer Schaltungsanordnung.

Die AF-Gruppen in den Fig. 2 und 3 sowie 4 und 5 haben unterschiedliche Semantik. Dies wird sofort klar, wenn man die flächenhaften Ansichten in den Fig. 3 und 5 vergleicht.

Fig. 2 und 3 zeigen eine AF-Gruppe mit semantischer Bedeutung für Sensoren und Aktuatoren, wobei der Schwerpunkt auf der Darstellung von Eingangs-/Ausgangsbeziehungen liegt. Fig. 4 und 5 hingegen zeigen eine AF-Gruppe mit semantischer Bedeutung für die Kommunikation zwischen verschiedenen Komponenten des CPS-Systems, wobei der Schwerpunkt auf der Darstellung von Nachrichtenflüssen und -beziehungen liegt.

Diese Unterschiede in den Semantiken werden in den flächenhaften Ansichten durch die unterschiedliche Darstellung von Sensoren, Aktuatoren und Kommunikationskomponenten sowie durch die Art und Weise, wie Daten zwischen ihnen fließen, deutlich. Diese Informationen können wichtig sein, um sicherzustellen, dass das CPS-System korrekt konfiguriert ist und wie erwartet funktioniert.

Die nachfolgenden Ausdrücke {E3a} bis {E3c} beschreiben alle die semantisch äquivalente AF-Gruppe in Fig. 4 und 5. Das Symbol ";" trennt Ausdrücke auf derselben Zeile. Diese drei Ausdrücke sind nur leicht anders formuliert, um verschiedene Aspekte der AF-Gruppe in Fig. 4 und Fig. 5 hervorzuheben. Diese unterschiedlichen Ansichten können nützlich sein, um die AF-Gruppe aus verschiedenen Perspektiven zu betrachten und ihre Eigenschaften besser zu verstehen.

Das Symbol ";" wird verwendet, um mehrere Ausdrücke auf derselben Zeile zu trennen, was dazu beitragen kann, den Code einfacher und übersichtlicher zu gestalten. Diese Syntax ist in vielen Programmiersprachen üblich und wird häufig verwendet, um zusammengehörige Anweisungen oder Ausdrücke auf einer Zeile zu gruppieren.

Insgesamt bieten die Ausdrücke {E3a} bis {E3c} eine präzise Beschreibung der AF-Gruppe aus den Fig. 4 und 5 und können Entwicklern helfen, ihre Eigenschaften und Beziehungen zu anderen Komponenten des CPS-Systems besser zu verstehen.

$$D1 < AF1; \quad D2 < AF2; \quad D1 > AF2; \quad D2 > AF3 \qquad \{E3a\}$$

$$AF1 > D1; \quad AF2 < D1; \quad AF2 > D2; \quad AF3 < D2 \qquad \{E3b\}$$

$$AF1 > D1 > AF2; \quad AF2 > D2 > AF3 \qquad \{E3c1\}$$

$$AF1 > D1 > AF2 > D2 > AF3 \qquad \{E3c2\}$$

{E4} ist eine typisierte Variante von {E3c2}. {E4} enthüllt eine Abfolge "wahrnehmen-berechnenhandeln", die für Steuerungs-Schleifen grundlegend ist, insbesondere für Roboter.

Durch Annotieren von {E4} mit Typen kann eine klare Abfolge "wahrnehmen-berechnenhandeln" hervorgehoben werden, die ein grundlegendes Prinzip in der Steuerung von CPS-Systemen darstellt. Diese Abfolge ist insbesondere für Roboter wichtig, da sie eine Reihe von Sensoren verwenden, um ihre Umgebung zu erfassen, Berechnungen durchführen, um Entscheidungen zu treffen, und Aktuatoren steuern, um bestimmte Handlungen auszuführen.

Diese Ansicht kann hilfreich sein, um die Funktionsweise eines CPS-Systems besser zu verstehen und sicherzustellen, dass es korrekt konfiguriert ist, um wie erwartet zu funktionieren. Durch das Annotieren von Ausdrücken mit Typen können Entwickler diese Informationen automatisch erfassen und analysieren lassen, anstatt sie manuell berechnen oder nachverfolgen zu müssen.

$$AF1{:}S@CN1 > D1{:}T1 > AF2{:}C@CN2 > D2{:}T2 > AF3{:}A@CN3 \qquad \{E4\}$$

Die grundlegenden CPS-Strukturen in den Fig. 2 bis 5 werden verwendet, um die DSL (Domain Specific Language) zu definieren. In der Praxis nutzen viele CPS jedoch mehrere Sensoren, Aktuatoren und Berechnungsfunktionen auf verschiedenen Knoten, sowie mehrere Datenkanäle für den Transport von atomaren und strukturierten Daten.

Jedoch, wenn die Aussagen der DSL sich auf ausgewählte Aspekte konzentrieren, die wichtig sind für ein bestimmtes System-Ingenieurziel oder Betriebsziel, dann sind auch einfache Strukturen wie die in den Fig. 2 bis 5 skizzierten realistisch.

Dieser Absatz betont die Bedeutung der Auswahl der relevanten Aspekte für eine bestimmte Ingenieurs- oder Betriebsziel bei der Definition einer DSL. Obwohl CPS in der Regel komplexere Strukturen aufweisen, können einfache Strukturen nützlich sein, um die wichtigsten Konzepte und Beziehungen zwischen den Komponenten eines CPS-Systems zu veranschaulichen.

Diese Ansicht kann auch dazu beitragen, das Verständnis für die grundlegenden Prinzipien von CPS-Systemen zu verbessern und Entwicklern eine Grundlage für den Umgang mit komplexeren Systemen zu bieten.

Fig. 6 zeigt ein weiteres schematisches Blockschaltbild einer Ausführungsform einer Schaltungsanordnung 10. Insbesondere ist ein Funktionswechselbeziehungsansicht gezeigt, welche Berechnungs- und Kommunikationsvorgänge über Automatisierungsfunktion 24, 26, 28 und DC (Datenkanäle) während eines bestimmten Zeitintervalls verknüpft.

Dieser Ansatz wird verwendet, um die Interaktionen zwischen den verschiedenen Funktionen in einem CPS-System zu veranschaulichen und zu analysieren. Dabei werden nicht nur die Berechnungsoperationen auf den einzelnen Knoten berücksichtigt, sondern auch die Kommunikationsvorgänge zwischen ihnen über die Datenkanäle hinweg.

Diese Ansicht kann dazu beitragen, das Verständnis für die Funktionsweise eines CPS-Systems zu verbessern und mögliche Probleme oder Engpässe in der Kommunikation zwischen den verschiedenen Funktionen zu identifizieren. Durch die Analyse dieser Wechselbeziehungen können Entwickler sicherstellen, dass das System korrekt konfiguriert ist und wie erwartet funktioniert.

Die Zeitintervalle werden verwendet, um die Interaktionen während bestimmten Zeiträumen zu betrachten, was hilfreich sein kann, um die Leistung des Systems im Laufe der Zeit zu verfolgen und mögliche Engpässe oder Probleme in der Kommunikation zu identifizieren.

Funktionswechselbeziehungsansichten können als Erweiterung der Funktionsverbindungsansichten angesehen werden, die neben einer Zeitleiste mit sequenziellen Operationen angeordnet sind, die von links nach rechts und parallelen Vorgängen von oben nach unten angeordnet sind.

Die erste Automatisierungsfunktion 24 wird in Kommunikationszyklus c2 auf Knoten CN1, also der ersten elektronischen Recheneinrichtung 12, erstellt; der Lebenslauf von der ersten Automatisierungsfunktion 24 beginnt ({E5a}). Die erste Automatisierungsfunktion 24 wird in Kommunikationszyklus c1 gelöscht; der Lebenslauf von der ersten Automatisierungsfunktion 24 endet.

<c2>: +AFa1@CN1   {E5a}

<c2>: -AFa1@CN1    {E5b}

Funktionsverbindungsansichten werden verwendet, um die Verbindungen zwischen den Funktionen eines Systems zu zeigen, während Funktionswechselbeziehungsansichten auch die Kommunikationsvorgänge berücksichtigen und in einem Zeitkontext dargestellt werden.

Der Lebenslauf von der ersten Automatisierungsfunktion 24 wird verwendet, um die Existenzdauer von der ersten Automatisierungsfunktion 24 im System zu veranschaulichen, beginnend mit der Erstellung in Kommunikationszyklus c2 auf Knoten CN1 und endend mit der Löschung in Kommunikationszyklus c1. Durch die Darstellung des Lebenslaufs von der ersten Automatisierungsfunktion 24 können Entwickler nachvollziehen, wie lange die erste Automatisierungsfunktion 24 im System existiert und wie es sich während seiner Existenz verhält.

Diese Ansichten können dazu beitragen, das Verständnis für die Funktionsweise eines CPS-Systems zu verbessern und mögliche Probleme oder Engpässe in der Kommunikation zwischen den verschiedenen Funktionen zu identifizieren.

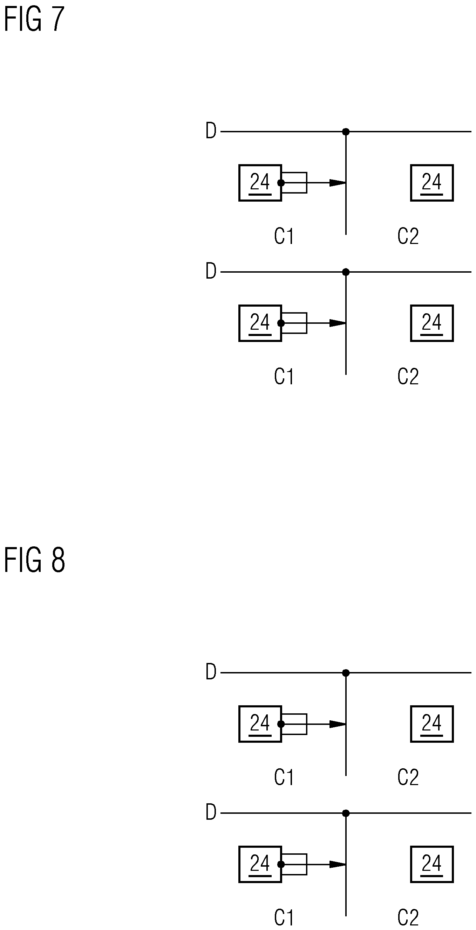

Fig. 7 und Fig. 8 zeigen ein weiteres schematisches Blockschaltbild einer Ausführungsform einer Schaltungsanordnung 10. Das Eingabe-Ausgabe-Interface eines AFI wird durch alle Datenkanäle (DC) definiert, die ein AFI abonniert oder veröffentlicht hat, zu einem bestimmten Zeitpunkt. In einer strengen Systemumgebung können erforderliche und bereitgestellte DC, einschließlich Typenspezifikationen, für statische und dynamische Typprüfungen verwendet werden.

Die erste Automatisierungsfunktion 24 veröffentlicht D im Kommunikationszyklus k1 ({E6a}). Die erste Automatisierungsfunktion 24 abonniert D im Kommunikationszyklus k1 ({E6b}). Die erste Automatisierungsfunktion 24 stoppt die Veröffentlichung von D im Kommunikationszyklus k1 ({E6c}). Die erste Automatisierungsfunktion 24 stoppt das Abonnieren von D im Kommunikationszyklus k1 ({E6d}).

<k1>: AFa1 +> D: AFa1 publishes data channel D        {E6a}

<k1>: AFa1 +< D: AFa1 subscribes data channel D        {E6b}

<k1>: AFa1 -> D: AFa1 stops publication of D        {E6c}

<k1>: AFa1 -< D: AFa1 unsubscribes data channel D        {E6d}

Die Veröffentlichung von Datenkanälen (DC), das Abonnieren von DC und deren Rückrufe sind Strukturänderungspunkte (< >).

Es folgen nun weitere nicht graphisch dargestellte Beispiele.

AFI senden oder empfangen Nachrichten in bereits veröffentlichten Datenkanälen (DC). Das Senden und Empfangen von Nachrichten ändert nicht die Struktur einer Automatisierungsfunktionsgruppe. Nachrichten werden über DC zwischen den Strukturänderungspunkten gesendet und empfangen.

D wurde veröffentlicht, damit die erste Automatisierungsfunktion 24 im Kommunikationszyklus k1 eine Nachricht vom Typ D senden kann ({E7a}). D wurde veröffentlicht, damit die erste Automatisierungsfunktion 24 im Kommunikationszyklus k1 eine Nachricht mit Wert v senden kann ({E7a}).

k1: AFa1 > D        {E7a}

k1: AFa1 > D=v        {E7b}

D wurde veröffentlicht. Im Anschluss daran sendet die erste Automatisierungsfunktion 24 im Kommunikationszyklus k1 keine Nachricht vom Typ D ({E8a1}). {E8a2} ist eine Variante von {E8a1}, in der die erste Automatisierungsfunktion 24 im Kommunikationszyklus k23 keine Nachricht mit Wert v sendet. {E8b} empfängt die erste Automatisierungsfunktion 24 im Kommunikationszyklus k1 keine Nachricht vom Typ D. {E8c} sendet keine AFI im Kommunikationszyklus k1 eine Nachricht vom Typ D.

k1: AFa1 /> D        {E8a1}

k23: AFa1 /> D=v        {E8a2}

k1: D /> AFa1        {E8b}

k1: /> D        {E8c}

AFIs senden und empfangen Nachrichten sequenziell oder parallel. D1 und D2 wurden veröffentlicht. Im Anschluss daran werden in {E9a} zwei Nachrichten sequenziell in den aufeinanderfolgenden Kommunikationszyklen k1 und k2 gesendet. In {E9b} werden zwei Nachrichten parallel im Kommunikationszyklus k1 gesendet.

k1: AFa1 > D1 > AFa2        {E9a}
k2: AFa2 > D2 > AFa3

k1: AFa1 > D1 > AFa3        {E9b}
k1: AFa2 > D2 > AFa3

Ein empfangendes AFI kann einen Datenkanal (DC) gemeinsam nutzen. Ebenso kann ein sendendes AFI denselben DC nutzen. D wurde veröffentlicht. Im Anschluss daran sendet die erste Kontrollfunktion 24 im Kommunikationszyklus k1 gemäß {E10a} eine Nachricht vom Typ D (mit demselben Zahlungsinhalt) an alle AFI, die sich für D angemeldet haben (die zweite Kontrollfunktion 26 und die dritte Kontrollfunktion 28). Die erste Kontrollfunktion 24 empfängt Nachrichten vom Typ D von allen AFI, die D veröffentlicht und im Kommunikationszyklus k1 eine Nachricht vom Typ D gesendet haben. Die erste Kontrollfunktion 24 empfängt eine Nachricht vom Typ D mit dem Wert v von der zweiten Kontrollfunktion 26 und eine weitere Nachricht vom Typ D mit dem Wert w von der dritten Kontrollfunktion 28.

$$\text{k1: AFa1 > D > AFa2, AFa3} \qquad \text{\{E10a1\}}$$

$$\text{k1: AFa1 > D > *} \qquad \text{\{E10a2\}}$$

$$\text{k1: AFa2, AFa3 > D > AFa1} \qquad \text{\{E10b1\}}$$

$$\text{k1: AFa* > D > AFa1} \qquad \text{\{E10b2\}}$$

$$\text{k1: AFa2 > D=v > AFa1} \qquad \text{\{E10c\}}$$
$$\text{k1: AFa3 > D=w > AFa1}$$

Aus Gründen der Sicherheit oder Zuverlässigkeit oder aus technischen Gründen können verschiedene AFI unterschiedliche Datenkanäle (DC) nutzen, wie beispielsweise in {E11} dargestellt, anstatt einen gemeinsam genutzten DC wie in dem verhaltensgleichen {E10b}.

$$\text{k1: AFa1 > D1 > AFa2; AFa1 > D2 > AFa3} \qquad \text{\{E11a\}}$$

$$\text{k1: AFa2 > D1 > AFa1; AFa3 > D2 > AFa1} \qquad \text{\{E11b\}}$$

Während einer Interaktion bleiben die Werte in den Variablen eines AFI konstant oder ändern sich, abhängig von der Eigenschaft des CPS im Fokus. Daten fließen in und zwischen den Variablen von einem oder mehreren AFI. {E12a} konzentriert sich auf die Auswirkungen von Rechenoperationen in AFI-Variablen. Die Variablen AFa1.x und AFa2.x tauschen ihre Werte aus. AFa1.x ändert seinen Wert von v am Ende des Rechenzyklus c1 zu w am Ende des Rechenzyklus c2. AFa2.x ändert seinen Wert von w am Ende von c1 zu v am Ende von c2.

$$\text{c1: AFa1.x=v; AFa2.x=w} \qquad \text{\{E12a\}}$$
$$\text{c2: AFa1.x=w; AFa2.x=v}$$

Mit dem Datenfluss:

$$\text{c1: AFa1.x=v,w} \qquad \text{\{E12b\}}$$
$$\text{k1: AFa1 > D=v > AFa2}$$
$$\text{c2: AFa2.x=u,v}$$

Der Wert von AFa1.x ändert sich vom Wert v in c0 zu w in c1 und sendet eine D-Nachricht mit dem neuen Wert v an AFa2 in k1. Bei Erhalt der D-Nachricht mit dem Wert v ändert AFa2.x den Wert von u in c1 zu v in c2.

Die vorgeschlagene Lösung bietet auch die Möglichkeit formale Eigenschaften von nahtlosen Upgrades von Nachrichten-gekoppelten, zeitgetriggerten Automatisierungsfunktionsgruppen zu beschreiben, die automatisch während der Systemlaufzeit getestet werden können. Die folgenden Eigenschaftsaussagen dienen als Beispiele: Instanzen von einem aktuierenden AF kontrollieren die physikalische Umgebung ausschließlich und gegenseitig exklusiv; Bereite Instanzen eines aktualisierbaren AF wechseln Ränge sofort nach einem Trigger; Eine sekundäre Instanz eines aktualisierbaren AF startet parallel zum primären Instanz; Primäre Instanzen setzen die Kommunikation während eines nahtlosen Upgrades fort; Peer-Instanzen eines aktuierenden AF kontrollieren die physikalische Umgebung ausschließlich und gegenseitig exklusiv

Die physikalische Umgebung eines Aktuators darf nicht verwechselt werden, insbesondere während nahtloser Upgrades, bei denen zwei Instanzen derselben aktuierenden AF parallel laufen. Nur die primäre Instanz i einer aktuierenden AF kontrolliert Aktuatoren. Sekundäre Instanzen von aktuierenden AF sind stumm geschaltet. Aus Sicherheitsgründen ist es notwendig, zu fordern, dass die Ausgänge beider upgradebezogenen Instanzen eines AF niemals gleichzeitig geöffnet sein dürfen.

$$\text{never (AF.type=Actuator.id=i.peer=j and AF.id=j).output=open} \qquad \text{\{E13\}}$$

{E13} gilt immer, in allen Berechnungszyklen, für alle Paare von Instanzen von Peers i und j aktualisierungsbezogener, aktuierender AF.

Während eines Versionswechsels tauschen Paare von Instanzen von Automatisierungsfunktionsinstanzen (AFI), die unterschiedliche Versionen derselben Automatisierungsfunktion (AF) implementieren, ihre Ränge aus, d. h., das Recht, die AF-Umgebung zu kontrollieren oder anders ausgedrückt, das Recht, AF-Ausgaben zu generieren.

Beispielsweise AFa1B und AFa2G sind ein solches AFI-Paar. Die Instanz 1 von AF a implementiert die Version "Blau" (AFa1B) und die Instanz 2 des gleichen AF a implementiert die Version "Grün" (AFa2G). SFu1 ist die Upgrade-Dienstfunktion, die Upgrades unter den upgradefähigen AF koordiniert.

Unmittelbar nach Erhalt eines Triggers von SFu1, dem Upgrade-Dienstprogramm, geht AFa1B vom Primär- zum Sekundärstatus über und AFa2G vom Sekundär- zum Primärstatus. AFa1B und AFa2G informieren SFu über ihre neuen Ränge.

c+0: AF.name=a.id=1.version=Blue.rank=primary // short: AFa1B          {E14a}

c+0: AF.name=a.id=2.version=Green.rank=secondary // short: AFa2G
k+0: SFu1 > command.upgrade=switch > AFa1B, AFa2G
c+1: AF.name=a.id=1.version=Blue.rank=secondary
c+1: AF.name=a.id=2.version=Green.rank=primary
k+1: AFa1B > info.rank=secondary > SFu1
k+1: AFa2G > info.rank=primary > SFu1

{E12b} kombiniert Berechnungs- und Kommunikationsunterausdrücke und verwendet den zeitlichen Operator "next" (nächster), um das gleiche wie {E14a} auszudrücken.

(SFu1 > command.upgrade=switch > AFa1B.rank=primary;          {E14b}

SFu1 > command.upgrade=switch > AFa2G.rank=secondary)
next
(AFa1B.rank=secondary > info.rank=secondary > SFu1;
AFa2G.rank=primary > info.rank=primary > SFu1)

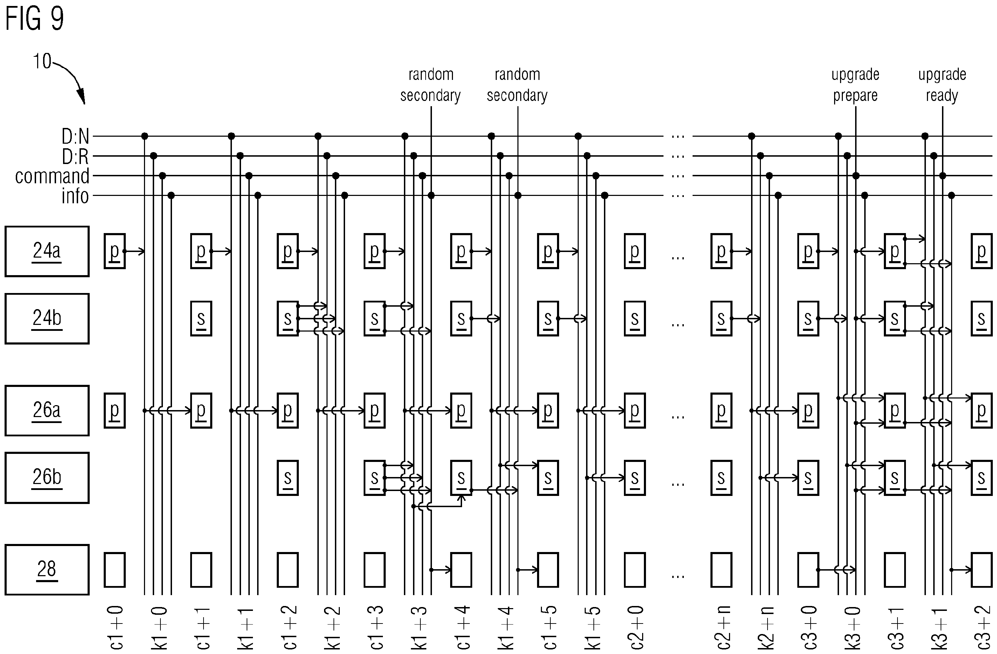

Fig. 9 zeigt ein schematisches Ablaufdiagramm gemäß einer zeitlichen Abfolge für eine Schaltungsanordnung 10. Während eines nahtlosen Upgrades durchlaufen upgradefähige AF den gleichen Grundlebenszyklus. Ein nahtloser Upgrade vollzieht sich in charakteristischen Sequenzen von Daten- und Nachrichtenflüssen zwischen AFI und SFu. {E15} beschreibt das Verhalten der Peer-Instanzen AFa1B und AFa2G von Afa und gruppiert es in drei Phasen: (1) starten Sie das sekundäre AFI parallel zum primären AFI, (2) führen Sie primäres und sekundäres AFI nebeneinander aus und (3) starten Sie das nahtlose Upgrade.

c1+0: AFa1B.rank=primary          {E15}

k1+0: AFa1B > D:N
c1+1: AFa1B.rank=primary; +AFa2G.rank=secondary
k1+1: AFa1B > D:N
c1+2: AFa1B.rank=primary; AFa2G.rank=secondary
k1+2: AFa1B > D:N; AFa2G (+> D:R; +< command, +> info)
c1+3: AFa1B.rank=primary; AFa2G.rank=secondary
k1+3: AFa1B > D:N; AFa2G > (D:R; info.rank=secondary)
c1+4: AFa1B.rank=primary; AFa2G.rank=secondary
k1+4: AFa1B > D:N; AFa2G > D:R
c1+5: AFa1B.rank=primary; AFa2G.rank=secondary
k1+5: AFa1B > D:N; AFa2G > D:R
c2+0: AFa1B.rank=primary; AFa2G.rank=secondary
k2+0: AFa1B > D:N; AFa2G > D:R
c2+n: AFa1B.rank=primary; AFa2G.rank=secondary
k2+n: AFa1B > D:N; AFa2G > D:R
c3+0: AFa1B.rank=primary; AFa2G.rank=secondary

k3+0: AFa1B > D:N; AFa2G > D:R
k3+0: command.upgrade=prepare > AFa1B, AFa2G
c3+1: AFa1B.rank=primary; AFa2G.rank=secondary
k3+1: AFa1B > (D:N; info.upgrade=ready); AFa2G > (D:R, info.upgrade=ready)

Für nahtlose Upgrades upgradefähiger AF, die ununterbrochen ausgeführt werden, wird das sekundäre AFI immer parallel zu ihrer jeweiligen primären AFI gestartet, wie in Fig. 9 skizziert und gleichwertig in {E15} beschrieben. Der einzige Unterschied besteht in der Anzahl und Struktur (Typen) von Veröffentlichungs-/Abonnementdatenkommunikationen.

{E15} beschreibt das Verhalten der Peer-Instanzen AFa1B und AFa2G von AFa, wobei AFI im Kontext nicht berücksichtigt wird, d.h. AFb1B, AFb2G und SFu1. Daher würde beispielsweise die kontextfreie Aussage AFa1B > D:N mit Kontext als AFa1B > D:N > AFb1B gelesen. Veröffentlichungs-/Abonnementdatenkommunikationen ermöglichen eine solche lose Kommunikation zwischen AF und erleichtern die Beschreibung des Fokusverhaltens. Vorausgesetzt, die kommunizierenden AFI sind aktiv und ausgeführt, gilt {E16a} immer während des Normalbetriebs sowie während eines nahtlosen Upgrades, das zur gleichen Zeit läuft.

$$\text{always } (AF.id=i > D > AF.id=j).rank=primary \qquad \{E16a\}$$

{E16} gilt insbesondere für AFa1B und AFb1B in dem in Fig. 9 skizzierten Szenario und während des Zeitraums von k1+3 bis k3+1, der in {E15} beschrieben wird.

{E16b} ist ähnlich wie {E16a}, wobei die Erweiterung die AF-Instanzen AFb1B und AFb2G sowie die Veröffentlichungs-/Abonnement-Datenkommunikation D:N und D:R umfasst.

$$(AFa1B.id=ai.peer=aj > D:N > AFb1B.id=bi.peer=bj).rank=primary \qquad \{E16b\}$$

$$\text{until } (AFa2G.id=aj.peer=ai > D:R > AFb2G.id=bj.peer=bi).rank=primary$$

Kompakte Aussagen über AF-Gruppen werden mit Temporal Logic of Meaning (TML) Operatoren formuliert, z.B. "never" in {E13}, "next" in {E14b}, "ever" in {E16a} und "until" in {E16b}, sowie Platzhalter, wie * in {E10}. Solche TML-Aussagen können mit detaillierten, zyklusgenauen Beschreibungen von AF-Gruppen in ACP, wie in Fig. 2 und/oder Interaktionen zwischen AF in AIP überprüft werden. TML-Aussagen können an bestimmte Eigenschaftsänderungspunkte geknüpft werden, indem sie nur während der Existenz der ausgewählten Ziel-AF-Gruppe gelten.

Bezugszeichenliste

| | |
|---|---|
| 10 | Schaltungsanordnung |
| 12 | erste elektronische Recheneinrichtung |
| 14 | zweite elektronische Recheneinrichtung |
| 16 | dritte elektronische Recheneinrichtung |
| 18 | erster Kommunikationskanal |
| 20 | zweiter Kommunikationskanal |
| 22 | Maschine |
| 24 | erste Automatisierungsfunktion |
| 26 | zweite Automatisierungsfunktion |
| 28 | dritte Automatisierungsfunktion |
| 30 | elektronische Recheneinrichtung |
| 32 | Erfassungseinrichtung |
| 34 | Eingabe |
| 36 | Darstellungsanforderung |
| 38 | Darstellung |
| 40 | Anzeigeeinrichtung |
| 42 | Steuersignal |
| 44 | Signal |
| 46 | Anzeigesignal |

**Patentansprüche**

1. Verfahren zum Anzeigen einer Schaltungsanordnung (10) zum Steuern einer Maschine (22) mittels einer elektronischen Recheneinrichtung (30), mit den Schritten:

   - Erfassen einer Eingabe (34) zur Beschreibung der Schaltungsanordnung (10) mittels einer Erfassungseinrichtung (32) der elektronischen Recheneinrichtung (30);
   - Erfassen einer Darstellungsanforderung (36) zum Darstellen der Schaltungsanordnung (10) mittels der Erfassungseinrichtung (32);
   - Erzeugen der Darstellung (38) der Schaltungsanordnung (10) in Abhängigkeit von der Eingabe (34) und in Abhängigkeit von der Darstellungsanforderung (36) mittels der elektronischen Recheneinrichtung (30); und
   - Anzeigen der erzeugten Darstellung (38) mittels einer Anzeigeeinrichtung (40) der elektronischen Recheneinrichtung (30).

2. Verfahren nach Anspruch 1, **dadurch gekennzeichnet, dass** als Eingabe (34) eine Texteingabe zur Beschreibung der Schaltungsanordnung (10) erfasst wird.

3. Verfahren nach Anspruch 2, **dadurch gekennzeichnet, dass** die Texteingabe in eine graphische Beschreibung der Schaltungsanordnung (10) transformiert wird.

4. Verfahren nach Anspruch 1, **dadurch gekennzeichnet, dass** als Eingabe (34) eine graphische Beschreibung der Schaltungsanordnung (10) erfasst wird.

5. Verfahren nach Anspruch 4, **dadurch gekennzeichnet, dass** die graphische Beschreibung in eine textuelle Darstellung der Schaltungsanordnung (10) transformiert wird.

6. Verfahren nach einem der vorhergehenden Ansprüche, **dadurch gekennzeichnet, dass** auf Basis der Eingabe (34) eine Darstellung (38) einer bereits existierenden Schaltungsanordnung (10) adaptiert wird.

7. Verfahren nach einem der vorhergehenden Ansprüche, **dadurch gekennzeichnet, dass** auf Basis der erzeugten Darstellung (38) ein Betriebstest der Schaltungsanordnung (10) durchgeführt wird.

8. Verfahren nach einem der vorhergehenden Ansprüche, **dadurch gekennzeichnet, dass** auf Basis der erzeugten Darstellung (38) eine Testfallgenerierung für einen Betriebstest der Schaltungsanordnung (10) durchgeführt wird.

9. Verfahren nach einem der vorhergehenden Ansprüche, **dadurch gekennzeichnet, dass** auf Basis der Darstellungsanforderung (36) gegenseitige Abhängigkeiten von zumindest zwei Komponenten der Schaltungsanordnung (10) dargestellt werden und/oder Kommunikationswege der zumindest zwei Komponenten dargestellt werden und/oder gegenseitige Beeinflussungen der zumindest zwei Komponenten dargestellt werden und/oder Abhängigkeiten zur Steuerung der Maschine (22) dargestellt werden.

10. Verfahren nach einem der vorhergehenden Ansprüche, **dadurch gekennzeichnet, dass** zeitabhängige Änderungen in der dargestellten Schaltungsanordnung (10) mit angezeigt werden.

11. Verfahren nach einem der vorhergehenden Ansprüche, **dadurch gekennzeichnet, dass** in Abhängigkeit von der Darstellungsanforderung (36) ein Detailgrad der Darstellung (28) angepasst wird.

12. Verfahren nach einem der vorhergehenden Ansprüche, **dadurch gekennzeichnet, dass** auf Basis der erzeugten Darstellung (38) der Schaltungsanordnung (10) zumindest ein Steuersignal (42) zum Steuern der Maschine (22) erzeugt wird.

13. Computerprogrammprodukt mit Programmcodemitteln, welche eine elektronische Recheneinrichtung (30) dazu veranlassen, wenn die Programmcodemittel von der elektronischen Recheneinrichtung (30) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (30) zum Anzeigen einer Schaltungsanordnung (10) zum Steuern einer Maschine (22), mit zumindest einer Erfassungseinrichtung (32) und einer Anzeigeeinrichtung (40), wobei die elektronische Recheneinrichtung (30) zum Durchführen eines Verfahrens nach einem der Ansprüche 1 bis 12 ausgebildet ist.

FIG 1

FIG 2

FIG 3

FIG 4

FIG 5

FIG 6

FIG 7

D ——————————•——————————

24  →  24

C1        C2

D ——————————•——————————

24  →  24

C1        C2

FIG 8

D ——————————•——————————

24  →  24

C1        C2

D ——————————•——————————

24  →  24

C1        C2

FIG 9

Europäisches Patentamt
European Patent Office
Office européen des brevets

# EUROPÄISCHER RECHERCHENBERICHT

Nummer der Anmeldung

EP 24 20 3925

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/022264 A1 (MACKLEM GRANT V [US] ET AL) 24. Januar 2008 (2008-01-24) | 1-3,6-9, 12-15 | INV. G05B19/042 |
| Y | * Absätze [0002], [0010], [0012] - [0018], [0076] - [0079], [0087] - [0105] * <br> * Absätze [0106] - [0125] * <br> * Anspruch 14 * <br> * Abbildungen 1A-3B, 5, 14-15E * | 4,5 | |
| | ----- | | |
| X | US 2017/286070 A1 (HOLZLEITNER MANUEL [DE] ET AL) 5. Oktober 2017 (2017-10-05) <br> * Absätze [0048] - [0058], [0094], [0097] - [0107], [0142] * <br> * Ansprüche 1,8 * <br> * Abbildungen 3A-4,6-10,14 * | 1-6,9, 10,12-15 | |
| | ----- | | |
| X | US 2009/070749 A1 (SOLIMANO MARCO [IT]) 12. März 2009 (2009-03-12) <br> * Absätze [0001], [0002], [0007] - [0018], [0023] - [0027], [0047], [0076] * <br> * Abbildungen 1,2 * | 1,4-6,9, 13-15 | |
| | ----- | | RECHERCHIERTE SACHGEBIETE (IPC) |
| Y | US 2003/192032 A1 (ANDRADE HUGO A [US] ET AL) 9. Oktober 2003 (2003-10-09) <br> * Absatz [0294] * | 4,5 | G06F <br> G05B |
| | ----- | | |
| A | KLIKOVITS STEFAN ET AL: "Pragmatic reuse for DSML development", SOFTWARE & SYSTEMS MODELING, SPRINGER BERLIN HEIDELBERG, BERLIN/HEIDELBERG, Bd. 20, Nr. 3, 14. Oktober 2020 (2020-10-14), Seiten 837-866, XP037482944, ISSN: 1619-1366, DOI: 10.1007/S10270-020-00831-4 [gefunden am 2020-10-14] * das ganze Dokument * | 1-15 | |
| | ----- | | |

Der vorliegende Recherchenbericht wurde für alle Patentansprüche erstellt

| Recherchenort | Abschlußdatum der Recherche | Prüfer |
|---|---|---|
| München | 10. März 2025 | Hristov, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................................

& : Mitglied der gleichen Patentfamilie, übereinstimmendes Dokument

# EP 4 722 829 A1

## ANHANG ZUM EUROPÄISCHEN RECHERCHENBERICHT
## ÜBER DIE EUROPÄISCHE PATENTANMELDUNG NR.

EP 24 20 3925

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-03-2025

| Im Recherchenbericht angeführtes Patentdokument | Datum der Veröffentlichung | Mitglied(er) der Patentfamilie | Datum der Veröffentlichung |
|---|---|---|---|
| US 2008022264 A1 | 24-01-2008 | KEINE | |
| US 2017286070 A1 | 05-10-2017 | KEINE | |
| US 2009070749 A1 | 12-03-2009 | EP 2037374 A1<br>US 2009070749 A1 | 18-03-2009<br>12-03-2009 |
| US 2003192032 A1 | 09-10-2003 | US 2002055834 A1<br>US 2003038842 A1<br>US 2003192032 A1 | 09-05-2002<br>27-02-2003<br>09-10-2003 |

EPO FORM P0461

Für nähere Einzelheiten zu diesem Anhang : siehe Amtsblatt des Europäischen Patentamts, Nr.12/82